# FASCICULE DE BREVET EUROPEEN

(11) **EP 1 011 906 B1**
(45) Date de publication et mention de la délivrance du brevet: **03.04.2002**
(21) Numéro de dépôt: 98943965.8
(22) Date de dépôt: 11.09.1998
(51) Int. Cl.: B23D 21/08

(54) **APPAREIL A MAIN POUR LA COUPE TRANSVERSALE D'UN TUYAU EN ACCES DIFFICILE**
ROHRSCHNEIDEGERÄT
HAND-HELD APPARATUS FOR TRANSVERSE CUTTING OF A NOT EASILY ACCESSIBLE PIPE

(30) Priorité: 12.09.1997 FR 9711381
(43) Date de publication de la demande: 28.06.2000
(73) Titulaire: Gillet Outillage, 52800 Nogent (FR)
(72) Inventeur: GILLET, Pascal, F-52800 Sarcey (FR); PETIT, Fabrice, F-52250 Orcevaux (FR)
(74) Mandataire: Bruder, Michel
(86) Numéro de dépôt international: FR9801946
(87) Numéro de publication internationale: WO9914007

(56) Documents cités:
- FR-A- 2 423 296
- US-A- 2 956 339
- US-A- 3 163 932

## Description

L'invention concerne un appareil à main selon le préambule de la revendication 1 défini d'après le document US-A-3,163,932 pour la coupe d'un objet cylindrique creux tel qu'un tuyau, particulièrement adapté aux situations où ledit tuyau est peu accessible et où il est difficile d'introduire des outils de coupe classiques, l'invention est notamment utilisable dans le domaine automobile, par exemple pour la coupe sur une voiture d'un tuyau formant tout ou partie du pot d'échappement.

La difficulté du démontage d'un pot d'échappement de voiture lors d'une réparation ou d'un remplacement est bien connue des professionnels concernés ; il est même très souvent impossible de le démonter pour procéder à son remplacement, aussi est-on amené à couper proprement un tuyau par exemple intermédiaire si celui-ci est encore sain et à le raccorder avec une pièce de rechange prévue à cet effet.

La coupe d'un objet cylindrique creux est toujours délicate, dans la mesure où, il est difficile de réaliser des coupes véritablement transversales, c'est-à-dire dans un plan perpendiculaire à l'axe du tuyau, et de surcroît il est obligatoire de maintenir correctement la scie pour assurer une coupe nette et propre ; ceci requiert naturellement un savoir-faire particulier et surtout de pouvoir bénéficier de suffisamment de place autour du tuyau pour assurer correctement cette opération.

On comprend bien que dans le cas d'un tuyau d'échappement de voiture par exemple, lorsqu'il est nécessaire de procéder à une coupe sur la voiture elle-même on ne puisse facilement utiliser des outils tels que des scies, du moins si l'on souhaite une coupe relativement précise.

D'un autre côté on connaît depuis longtemps, des outils coupe tube fonctionnant non plus par sciage mais par gravure périmétrique dont la profondeur du sillon est obtenue progressivement par rotation de l'outil autour du tuyau dans le plan de coupe transversale ; de tels outils comportent généralement une carcasse annulaire que l'on vient disposer autour du tuyau sensiblement dans le plan de coupe ; cette carcasse comporte une molette de coupe venant tangenter le tuyau sur la ligne de coupe puis rouler en périphérie de celui-ci, son axe de rotation restant parallèle à l'axe longitudinal du tuyau ; deux bras symétriques, issus de la carcasse annulaire selon une direction radiale par rapport au tuyau, permettent d'une part d'entraîner en rotation ladite carcasse lorsque la molette est en contact avec le tuyau et l'un d'eux est généralement équipé d'une rampe à vis permettant par un mécanisme adéquat de repousser l'axe de la molette de coupe radialement vers le tuyau afin d'augmenter la pression de gravure sur celui-ci au fur et à mesure de sa rotation ; il est bien évident que des dispositifs de contre-réaction à galets sont prévus pour centrer le tuyau dans la carcasse annulaire dont ils facilitent les mouvements de rotation autour du tuyau. Ce type d'appareil qui est par exemple décrit dans le brevet US 2 956 339 est naturellement totalement inutilisable dans tous les cas où les tuyaux ne présentent pas un environnement suffisamment dégagé pour permettre la libre rotation des bras contrôlant comme on l'a vu, non seulement le couple de rotation mais encore la pression de gravure de la molette.

La présente invention a pour objet de proposer un appareil à main de construction particulièrement simple permettant d'effectuer des coupes franches et précises de tuyaux dans des conditions d'accès difficile, c'est-à-dire en préférant la technique de gravure aux techniques de sciage, telle que rappelée en préambule, pour palier aux inconvénients sus-évoqués. A cet effet, l'appareil manuel pour la coupe transversale de tuyaux conforme à l'invention, utilise au moins une molette de coupe roulant à la surface externe d'un tuyau dans le plan transversal de coupe et soumise à une pression radiale maintenue sensiblement constante en coopération avec des galets de contre-réaction pour procurer à chaque tour une gravure de plus en plus profonde jusqu'à la coupe finale du tuyau ; l'appareil est formé de deux demi-coquilles, montées autour du tuyau par des moyens de serrage ajustables dans le plan de coupe, supportant sur leurs faces internes concaves en regard pour l'une, au moins une molette de coupe montée à égale distance de l'extrémité de la demi-coquille et à rotation libre autour d'un axe perpendiculaire au plan de coupe et qui peut être fixe ou déplaçable parallèlement à lui-même suivant une radiale de l'appareil de telle façon que sa partie tranchante déborde radialement de la face interne de la demi-coquille d'une valeur égale ou supérieure à l'épaisseur du tuyau et pour l'autre, soit au moins deux molettes avantageusement identiques montées en débord comme sur l'autre demi-coquille et réparties d'un côté et de l'autre à égale distance des extrémités de ladite demi-coquille, soit au moins deux galets montés à rotation libre autour de deux axes fixes perpendiculaires au plan de coupe de telle façon que leur surface de roulement déborde radialement de la face interne de la demi-coquille et que chaque axe soit à la même distance de l'extrémité la plus proche de la demi-coquille, la ou les molettes de coupe étant toutes dans le même plan de coupe les galets sur une même demi-coquille étant disposés par paire en face de chaque molette de coupe sur l'autre demi-coquille pour compenser l'effort de gravure dans la rotation de l'ensemble autour du tuyau dans le plan de coupe, obtenue par la coopération d'un outil d'entraînement avec des moyens d'accrochage répartis sur la face externe ou en périphérie de chaque demi-coquille. On trouve un exemple de ce type d'appareil décrit dans le brevet US 3 163 932 dans lequel les demi-coquilles sont articulées d'un côté et comportent de l'autre pour leur fermeture, un système à genouillère ; cet appareil est évidemment limité à la coupe de tuyau ayant un diamètre particulier puisque le passage entre molette et galet est fixé par construction.

En outre, cet outillage spécifique est particulièrement onéreux dans sa construction.

Selon l'invention, chaque demi-coquille de l'appareil est de forme générale identique, obtenue à partir d'un plat d'épaisseur convenable par exemple en tôle acier, découpé embouti en forme générale d'anneau présentant dans son plan un axe de symétrie vertical, un évidement au centre de l'anneau étant prévu pour recevoir les plus grandes sections de tuyau à couper et sa périphérie étant découpée en fonction du profil des moyens d'accrochage de l'outil d'entraînement de telle manière que le côté droit et le côté gauche par rapport à l'axe de symétrie vertical de l'anneau puisse se correspondre par projection orthogonale après que l'anneau ait été mis en forme générale de U par un double pliage rectangulaire autour de deux axes verticaux parallèles audit axe de symétrie verticale et disposés à égale distance de celui-ci procurant après pliage et perçages adéquats une chape pour la ou les molettes et/ou les galets, les parties planes haute et basse de l'anneau comprises entre les deux axes de pliage correspondant au fond du U et formant les pièces de liaison entre les côtés gauche et droit de la chape, étant aptes à recevoir les moyens de serrage ajustables des deux demi-coquilles après montage en opposition autour du tuyau.

On comprend bien tous les avantages d'un tel appareil qui, à la simplicité et à la rusticité bien adaptées à la destination de l'outil, ajoute les performances des appareils les plus professionnels. A cet effet, il est tout à fait facile de comprendre le fonctionnement de ce dispositif comportant deux ensembles symétriques qu'il suffit de venir rapporter de part et d'autre du tuyau à couper en les solidarisant en opposition par leurs extrémités en regard, comme il sera détaillé plus loin. On observera ici que la seule limite de dégagement d'environnement correspond sensiblement à la plus grande épaisseur de chaque demi-coquille, ce qui permet d'envisager les cas les plus difficiles ou presque.

D'autres caractéristiques et avantages ressortiront mieux encore de la description qui va être donnée d'un mode de réalisation préféré d'un appareil conforme à la revendication principale de l'invention donnée ci-après à titre d'exemple non limitatif en référence au dessin sur lequel :
- la figure 1 représente en vue de face et en élévation l'appareil selon l'invention monté autour d'un tuyau que l'on veut sectionner grâce à une clé à ergots partiellement représentée à droite de la figure,
- la figure 2 est une vue de droite de la figure précédente sans la clé à ergots,
- la figure 3 est une représentation en vue de face d'une pièce en tôle acier découpée emboutie qui constituera après divers pliages l'une ou l'autre des coquilles formant l'appareil représenté aux figures précédentes,
- la figure 4 représente en perspective une chape obtenue par un double pliage de la pièce représentée à la figure précédente, pour procurer après montage des galets et/ou des molettes de coupe, une demi-coquille de l'appareil conforme à l'invention.

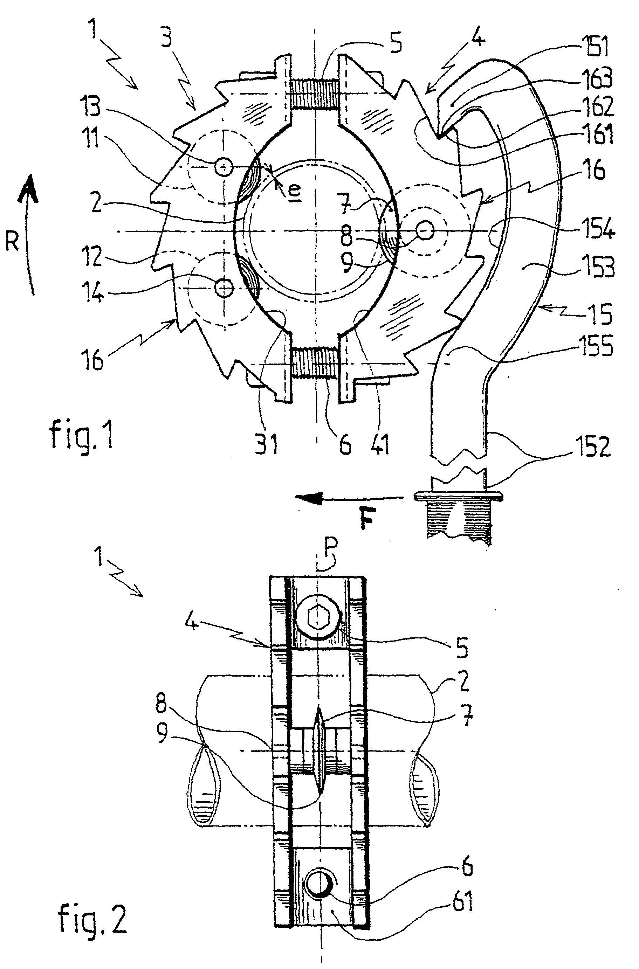

Selon la variante préférée de l'invention telle que représentée aux figures 1 et 2 du dessin, l'appareil à main 1 destiné à couper transversalement un objet cylindrique creux tel qu'un tuyau 2 est formé de deux demi-coquilles à gauche 3 et à droite 4 de la figure 1, avantageusement identiques et montées en opposition de part et d'autre du tuyau 2, c'est-à-dire que la concavité des faces internes 31,41 respectivement des demi-coquilles 3 et 4, se trouvent en regard lorsque les deux demi-coquilles 3,4 sont contreserrées autour du tuyau au moyen avantageux de deux vis 5,6 du type BTR montées comme il sera expliqué plus loin respectivement aux extrémités supérieure et inférieure des deux demi-coquilles 3 et 4.

Selon sa configuration préférée, l'appareil 1 est muni sur sa demi-coquille 4 d'une molette de coupe 7 disposé à égale distance des extrémités de la demi-coquille ; la molette 7 peut tourner librement autour de son axe fixe 8 perpendiculaire au plan de coupe P (figure 2) de telle manière que la partie tranchante 9 déborde radialement de la face interne 41 de la demi-coquille 4 d'une valeur égale ou supérieure à l'épaisseur e du tuyau 2 et de telle manière qu'au cours de l'opération de gravure par rotation de l'outil dans le plan de coupe P, la surface externe du tuyau ne vienne jamais au contact de la face interne 41 de la demi-coquille 4 ce qui mettrait un terme à toute pénétration supplémentaire du filet tranchant 9 de la molette de coupe 7.

En contre-réaction des efforts radiaux imprimés par la molette 7 sur le tuyau 2, on prévoit dans la variante préférée, deux galets 11 et 12 symétriquement disposés de part et d'autre du diamètre du tube 2 passant par l'axe 8 de la molette 7, suivant des axes 13,14 perpendiculaires au plan de coupe P et solidaires de la demi-coquille 3 ; avantageusement les axes 13 et 14 seront à égale distance des extrémités inférieure et supérieure de la demi-coquille 3 comme on le verra plus loin. Bien entendu, les deux galets 11 et 12 viennent déborder radialement de la face interne 31 de la demi-coquille 3 pour éviter ici encore que le tube 2 ne soit en contact avec ladite face interne 31 quel que soit par ailleurs le diamètre du tuyau entrant dans la gamme de l'appareil de coupe 1.

L'appareil 1 ainsi configuré, bénéficiant de trois appuis radiaux sur le tuyau 2 à découper, peut de manière stable subir une rotation régulière autour du même tuyau grâce à un outil d'entraînement 15 qui sera détaillé plus loin dans la description.

Le fonctionnement de l'appareil de coupe apparaît alors extrêmement simple : dans la rotation de l'ensemble 1, la molette 7 entraînée tangentiellement sur le tuyau 2 qui reste fixe par hypothèse, vient graver celui-ci suivant une ligne périmètrique définissant le plan de coupe P ; naturellement, la profondeur de la gravure sera directement proportionnelle non seulement à la finesse et à la forme du tranchant 9 de la molette 7, mais encore à la force de pression de la même molette 7 sur le tuyau 2 en leur point de contact ; cette force de pression radiale de la molette 7 sur le tuyau 2 est directement déterminée par le serrage entre les deux demi-coquilles 3 et 4 qui sera facilement ajusté au moyen des deux vis tangentielles 5 et 6 tendant comme on l'a vu à rapprocher les extrémités des deux demi-coquilles 3 et 4.

Selon une application typique de l'invention, l'appareil 1 après avoir été monté autour du tuyau 2 que l'on souhaite couper en amenant de part et d'autre de ce tuyau les deux demi-coquilles 3 et 4 qui seront rapprochées sensiblement dans le plan de coupe P et maintenues ensemble en emboîtant de manière symétrique les deux vis tangentielles 5,6 jusqu'à supprimer tout jeu entre l'appareil 1 et le tuyau 2, la molette 7 étant alors en appui sur le tuyau 2, c'est-à-dire en position de gravure. Par rotation au moyen d'un outil à main 15 telle qu'une clé à ergots, l'appareil 1 est entraîné en rotation autour du tuyau qui subira une première pénétration de la molette 7. Avant d'effectuer un deuxième tour de l'appareil, l'opérateur serrera d'une même valeur les deux vis tangentielles 5 et 6 de manière à retrouver la même pression qu'à l'origine pour la molette 7 qui peut alors dans un deuxième tour engendrer une nouvelle pénétration du même ordre que la première et ainsi de suite jusqu'à découpe totale.

Selon une caractéristique essentielle de l'invention, l'entraînement en rotation de l'appareil de coupe 1 autour du tuyau 2 dans le plan transversal de coupe P, est effectué selon une variante préférée grâce à un mécanisme à rochet tel que représenté à droite de la figure 1. On dispose à la périphérie externe de chaque demi-coquille 3 et 4 des ergots 16 comportant à l'instar des dents d'un rochet, une rampe d'accès 161 moyennement inclinée et un front 162 pour déterminer avec la base de la rampe 161 de l'ergot suivant, un angle saillant 163 susceptible de coopérer avec l'extrémité distale 151 en forme de crochet de l'outil 15.

A cet égard, l'outil d'entraînement 15 comprend un manche 152 prolongé d'une partie en demi-lune 153 à face interne concave 154 venant se raccorder au manche par un épaulement convexe 155 et se terminant par le crochet 151 de forme adéquate pour s'encastrer comme on l'a dit dans les ergots 16 des demi-coquilles 3,4 de telle façon qu'en faisant levier sur le manche 15, en pivot sur l'épaulement 155 qui vient en appui sur un autre ergot disposé plus bas sur la demi-coquille, on force l'ensemble à tourner autour du tuyau 2 en engagent successivement le crochet 151 dans les ergots suivants pour procurer un mouvement régulier de rotation (flèche R figure 1) par des mouvements translatifs F sur le manche 152 de l'outil 15.

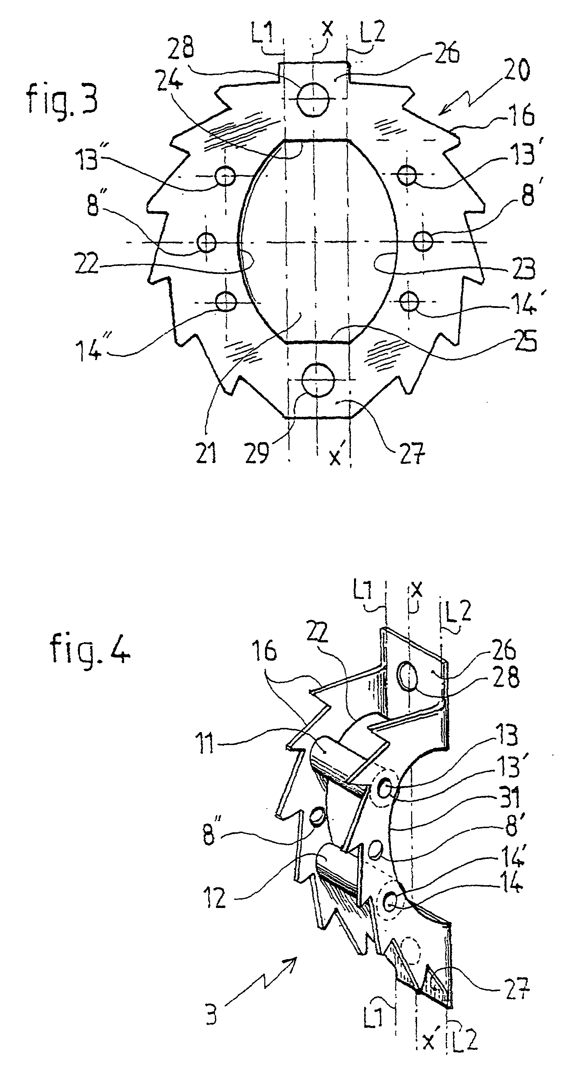

En référence aux figures 3 et 4 et selon une caractéristique essentielle de l'invention, il sera maintenant décrit un mode d'exécution préférée de l'appareil 1 fonctionnant comme il vient d'être dit.

Chaque demi-coquille 3,4 est obtenue à partir d'un plat en tôle d'acier d'épaisseur convenable, par exemple quatre millimètres, découpé embouti en forme générale d'anneau 20 présentant dans son plan un axe de symétrie verticale xx' conformément à la figure 3 du dessin ; sensiblement au centre de cet anneau 20 on prévoit un évidemment central 21 délimité d'une part, à gauche et à droite de l'axe de symétrie verticale xx' par des courbes concaves qui sont, par exemple et avantageusement, des arcs de cercle identiques montés en opposition et dont les rayons seront précisés ultérieurement, et d'autre part, en haut et en bas (sur la figure 3) par des segments parallèles respectivement 24,25 reliant les extrémités hautes et basses des courbes concaves gauche 22 et droite 23.

Tout autour de l'anneau 20, et de manière complètement symétrique par rapport à l'axe vertical xx' on découpe des ergots 16 dont le profil a déjà été précisé ci-dessus. Ces ergots 16 conformément à ce qui a été développé au début de cette description serviront ultérieurement de moyen d'accrochage de l'outil d'actionnement 15 comme il a été dit.

Dans les parties hautes et basses de l'anneau 20, il est prévu deux plaques 26 et 27 formant la liaison entre les parties gauche et droite de l'anneau 20 ; avantageusement, les pièces de liaison 26,27 sont découpées comme indiquées sur la figure 3 pour former un carré de côté égal aux segments 24,25 reliant les courbes internes 22,23 de l'évidement central 21.

Enfin, sur l'anneau ainsi constitué, on prévoit un certain nombre de perçages destinés à recevoir ultérieurement les axes 8, 13 et 14 respectivement des molettes de coupe 7 et des galets de contre-réaction 13,14. Ces perçages sont disposés de manière tout à fait symétrique selon xx' sur l'anneau 20 ; compte tenu de la symétrie souhaitable des pièces constituant les deux demi-coquilles de l'appareil 1, il sera avantageux de prévoir tous les perçages possibles sur chaque anneau 20 qu'ils soient ou non tous utilisés lors du montage ; avantageusement, on a donc référencé sur les figures les perçages de la même manière que les références des organes susceptibles de coopérer avec ces perçages mais en le primant ; selon l'exécution préférée, l'anneau 20 sera également muni de deux perçages supplémentaires 28,29 disposés au centre des deux pièces de liaison supérieure 26 inférieure 27 de l'anneau 20 ; ces perçages serviront comme il sera dit plus loin au passage des vis tangentielles 5,6 destinées à contreserrer les deux demi-coquilles 3,4 autour du tuyau.

Comme représenté en perspective sur la figure 4, l'anneau 20 de la figure 3 va être mis en forme par pliage pour obtenir chaque demi-coquille 3,4 ; dans l'exemple qui suit nous décrirons en détail l'obtention de la coquille 3 à gauche sur la figure 1 comportant les galets presseurs 11,12 ; il est bien évident que la technique est totalement identique pour former l'autre demi-coquille 4 ne différant de la première qu'en ce que les galets 11,12 sont remplacés par la molette de coupe 7 disposée entre les deux perçages 8' et 8" de l'anneau 20.

Pour la réalisation de la demi-coquille 3, l'anneau 20 est soumis à deux pliages rectangulaires autour des deux axes verticaux L1,L2 (figure 3) passant respectivement sur les côtés gauche et droit des deux pièces de liaison 26,27 de l'anneau 20, ces deux pièces de liaison 26,27 restant par exemple dans le plan du dessin, le formage de la demi-coquille 3 consisterait à mettre à la verticale les deux côtés gauche et droit de l'anneau 20 par pliage à angle droit autour de L1 et L2 ; on obtient ainsi une demi-coquille en U destinée à former une chape pour recevoir les axes 13,14 des galets 11,12 (alternativement l'axe 8 de la molette de coupe 7) puisque par construction symétrique, les alésages se correspondent parfaitement ; en outre et toujours par construction, conformément à ce qui a été dit au-dessus, les ergots 16 d'un côté et de l'autre de l'anneau 20 monté en U, se correspondent par projection orthogonale et procurent donc un système d'accrochage en forme de dent de rochet particulièrement efficace pour coopérer avec le crochet 151 de l'outil d'entraînement 15.

Il est évident que le pliage et le montage des galets et des molettes de coupe se font suivant des techniques que maîtrise parfaitement l'Homme du Métier et qui, de ce fait, ne seront pas plus longuement détaillés.

Pour obtenir le montage complet de l'appareil 1 il suffira de réunir une coquille 3 montée avec ses deux galets 11 et 12 et une coquille 4 montée comme on l'a dit très exactement de la même manière, en remplaçant les deux galets par une molette de coupe 7 en prenant soin d'inverser le sens des ergots de la coquille 4 par rapport à la coquille 3 afin d'obtenir une continuité de denture tout autour de l'appareil ainsi constitué ; tout ceci est naturellement possible en raison de la totale symétrie des pièces comme il a été dit plusieurs fois ci-dessus. Selon l'exécution préférée de l'invention, les deux demi-coquilles 3 et 4 peuvent être contreserrée en opposition autour du tube du tuyau 2 à couper par le moyen des vis tangentielles 5,6 que l'on vient passer au travers des alésages hauts 28 et bas 29 de chacune de deux demi-coquilles 3 et 4.

Selon une autre caractéristique de l'invention, les deux vis tangentielles 5 et 6 sont montées pour l'une 5 tête à droite de la figure 1 et pour l'autre 6 tête à gauche sur la figure 1 ce qui facilite ultérieurement les serrages successifs au moment de la gravure en utilisant en même temps deux outils manipulés par chaque main de l'opérateur.

Selon une autre caractéristique, les deux vis 5,6 coopèrent avec des écrous 61 figure 2 dont la forme extérieure vient s'encastrer entre les deux côtés des coquilles interdisant ainsi sa rotation ; une découpe adéquate des pièces de liaison 26,27 permet avantageusement de bloquer le même écrou en bonne position en rabattant une partie découpée par exemple.

Il va de soi que tous autres montages qui sont à la portée de l'Homme du Métier pourraient fort bien convenir, comme par exemple le fait de tarauder directement l'un des deux perçages 28 ou 29 des deux demi-coquilles 3 et 4 de manière que les vis de l'une coopère avec le filetage de l'autre.

De même et selon d'autres dispositions techniquement équivalentes, on pourrait envisager de contreserrer les deux demi-coquilles 3,4 par des systèmes à genouillères réglables (non représentés sur les figures) qui, en combinaison ou pas avec une articulation d'un côté pourraient procurer un serrage de l'autre côté ; néanmoins, ces systèmes sont coûteux et sont incontestablement moins progressifs que des systèmes à vis ; on pourrait également envisager de prévoir une articulation d'un côté et un unique système à vis de l'autre en variante de l'exécution préférée ; on pourrait aussi combiner les solutions précédentes avec le déplacement radial de l'axe 8 de la ou des molettes de coupe ou même on pourrait n'agit que sur ce déplacement radial, grâce à un mécanisme d'avance que l'Homme du Métier n'aurait aucune difficulté à adapter.

Enfin, et selon une dernière caractéristique de l'invention, l'espace délimité entre les deux demi-coquilles 3,4 lorsqu'elles sont montées en opposition dépend évidemment de la forme de l'évidement central 21 que l'on donnera à chaque anneau 20 et en particulier la capacité de l'appareil 1 dépendra du rayon de courbure des faces internes concaves 31,41 des deux demi-coquilles 3,4.

A cet effet, on sait que les courbes 22 et 23 de l'évidement central 21 de l'anneau 20 lorsqu'il est à plat détermine directement les rayons de courbures 31 et 41 de l'appareil 1 ; il est donc proposé que le rayon des courbes 22 et 23 soit au moins égal au rayon du plus grand tuyau que l'on souhaite couper et au plus tel que le plus petit tuyau entrant dans la gamme de coupe de l'appareil 1 puisse encore reposer sur les deux galets 11 et 12 (alternativement sur deux molettes de coupe 7) sans qu'il n'y ait jamais contact avec les surfaces internes concaves 31,41 des demi-coquilles 3,4. Ainsi, sous réserve de déterminer une gamme de diamètres de tuyaux susceptibles d'être coupés par l'appareillage 1, ce dernier peut être construit pour une très large gamme de tuyaux ce qui en fait un avantage décisif.

Enfin, il va de soi que les matières utilisées tant pour les demi-coquilles (acier XC48 par exemple) que pour les molettes de coupe ou les galets (acier trempé) peuvent être variées pour des réalisations particulières sans sortir du cadre de l'invention ; d'un autre côté, la taille des dents périphériques pour l'entraînement de l'outillage par une clé à ergots par exemple ainsi que les diverses épaisseurs ou largeurs des ailes de chaque demi-coquille seront facilement adaptées en fonction de la destination et de l'utilisation que l'on veut faire de l'outil conforme à l'invention.

Il est évident que le dispositif d'entraînement en rotation de l'appareil 1 retenu à titre préférentiel dans l'invention, à savoir la coopération d'une disposition périmétrique à rochet de l'appareil 1 venant coopérer avec une clé à ergots 15 n'est pas unique et pourrait tout à fait être remplacé par des dispositifs techniquement équivalents : encoches radiales à la périphérie de l'appareil coopérant avec une clé à crabots ou encore succession de perçages périmétriques sur l'appareil 1 coopérant avec une clé adéquate de la même manière que les ergots ou les crabots, etc ... Enfin, la solution à rochet et clé à ergots apparaît être la solution la plus avantageuse, procurant de grandes rotations pour de faibles débattements de l'outil d'entraînement 15 puisqu'il suffit de multiplier le nombre d'ergots à la périphérie de l'outil pour obtenir des avancements même en situation d'espace restreint comme c'est toujours le cas en réparation automobile.

## Revendications

1. Appareil à main (1) pour la coupe transversale d'un tuyau utilisant au moins une molette de coupe (7) roulant à la surface externe d'un tuyau (2) dans le plan transversal de coupe (P) et soumise à une pression radiale maintenue sensiblement constante en coopération avec des galets de contreréaction (11,12) pour procurer à chaque tour une gravure de plus en plus profonde jusqu'à la coupe complète du tuyau (2) l'appareil comportant deux demi-coquilles (3,4), montées concavité en opposition autour du tuyau (2) par des moyens de serrage (5,6) ajustables dans le plan de coupe (P), et supportant, sur leurs faces concaves (31,41) en regard, pour l'une (4) au moins une molette de coupe (7) qui peut être fixe ou se déplacer parallèlement à elle-même suivant une radiale de l'appareil pour que sa partie tranchante (9) déborde radialement de la face concave(41) de la demi-coquille (4) d'une valeur égale ou supérieure à l'épaisseur e du tuyau (2), et pour l'autre (3) au moins deux galets (11,12) montés de telle façon que leur surface de roulement déborde radialement de la face concave (31) de l'autre demi-coquille (3)en étant disposés par paire de part et d'autre de chaque molette de coupe (7) sur l'autre demi-coquille (4) pour compenser l'effort de gravure dans la rotation de l'ensemble, obtenue par un outil autonome d'entraînement tangentiel (15) agissant sur des moyens d'accrochage (16) répartis à la périphérie de chaque demi-coquille (3,4) **caractérisé en ce que** chaque demi-coquille (3,4) est de forme générale identique obtenue à partir d'un plat d'épaisseur convenable par exemple en tôle acier, découpé embouti en forme générale d'anneau (20) présentant dans son plan un axe de symétrie vertical (xx'), un évidement (21) au centre de l'anneau étant prévu pour recevoir les plus grandes sections de tuyau à couper (2) et sa périphérie étant découpée en fonction du profil des moyens d'accrochage de l'outil d'entraînement (15) de telle manière que le côté droit et le côté gauche par rapport à l'axe de symétrie vertical xx' de l'anneau (20), puisse se correspondre par projection orthogonale après que l'anneau ait été mis en forme générale de U par un double pliage rectangulaire autour de deux axes verticaux(L1,L2) parallèles audit axe de symétrie verticale et disposés à égale distance de celui-ci procurant après pliage et perçages adéquats (8'8",13'13",14'14") une chape pour la ou les molettes (7) et/ou les galets (11,12), les parties planes haute et basse de l'anneau (20) comprises entre les deux axes de pliage (L1,L2) correspondant au fond du U et formant les pièces de liaison (26,27) entre les côtés gauche et droit de la chape, étant aptes à recevoir les moyens de serrage ajustables (5,6) des deux demi-coquilles (3,4) après montage en opposition autour du tuyau (2).

2. Appareil (1) selon la revendication précédente **caractérisé en ce que** les moyens de serrage ajustables (5,6) qui sont disposés sur les pièces de liaison (26,27) de chaque demi-coquille (3,4) sont constitués par la combinaison quelconque d'une genouillère réglable ou d'une vis tangentielle (5,6) éventuellement à écrou semi-prisonnier ou analogue entre chaque couple de pièces de liaison (26,27).

3. Appareil (1) selon la revendication 2 **caractérisé en ce que** les demi-coquilles (3,4) sont contreserrées progressivement en opposition sur le tuyau à couper (2) par une vis tangentielle (5,6) à chacune de leur extrémité, montées tête à droite en haut et tête à gauche en bas ou inversement, les vis (5,6) traversant les pièces de liaison (26,27) en regard coopérant avec un écrou éventuellement semi-prisonnier par exemple par un emboutissage adéquat de la pièce de liaison (26,27) au contact avec ledit écrou.

4. Appareil (1) selon l'une quelconque des revendications précédentes **caractérisé en ce que** les moyens d'accrochage (16) sur la face convexe ou la périphérie de chaque demi-coquille (3,4) sont du type d'une demi-roue à rochet ou similaire, prévus pour coopérer avec une clé à ergots (15) qui procure une grande rotation pour un faible débattement de l'outil (15).

5. Appareil (1) selon la revendication précédente **caractérisé en ce que** les ergots (16) prévus de chaque côté de l'anneau à plat (20) sont tous identiques et disposés symétriquement par rapport à l'axe de symétrie verticale xx' en nombre suffisant pour une bonne progressivité de la rotation sans débattement excessif de l'outil d'entraînement.

6. Appareil (1) selon la revendication précédente **caractérisé en ce que** les demi-coquilles (3,4) sont assemblées autour du tuyau à découper (2) de telle manière que la pièce de liaison (26) de l'une (3) soit en face de la pièce de liaison (27) de l'autre (4) procurant une continuité dans la succession des ergots (16) formant ainsi une roue à rochet.

7. Appareil (1) selon l'une quelconque des revendications précédentes **caractérisé en ce que** les perçages de chaque demi-coquilles (3,4) pour recevoir les axes (8) des molettes (7) et/ou des galets (11,12) et les vis de liaison (5,6), sont effectués directement sur l'anneau à plat (20), avant pliage en U, et avantageusement mais pas nécessairement, tous ces perçages seront effectués symétriquement d'un côté et de l'autre de l'anneau (20).

8. Appareil (1) selon l'une quelconque des revendications 4 à 7 **caractérisé en ce que** l'outil d'entraînement (15) comprend un manche (152) prolongé d'une partie en demi-lune (153) à face interne concave (154) venant se raccorder au manche (152) par un épaulement convexe (155) et se terminant par un crochet (151) de forme adéquate pour s'encastrer dans un ergot (16) du rochet de telle façon qu'en faisant levier sur le manche (15) en pivot sur l'épaulement (155) qui vient en appui sur un autre ergot (16), on force l'ensemble à tourner autour du tuyau (2) en engageant successivement le crochet (151) dans les ergots suivants pour procurer un mouvement régulier de rotation.

9. Appareil (1) selon l'une quelconque des revendications précédentes **caractérisé en ce que** l'évidement central (21) de l'anneau à plat (20) est délimité d'une part à gauche et à droite de l'axe de symétrie verticale (xx') par des courbes concaves (22,23), avantageusement des arcs de cercle identiques, et montée en opposition, dont le rayon est au moins égal au rayon du plus grand tuyau à couper (2) et au plus tel que le plus petit tuyau à couper (2) puisse encore reposer sur deux galets (11,12) ou deux molettes de coupe (7) sans contact avec la surface interne concave (31,41) des demi-coquilles (3,4), et d'autre part en haut et en bas par des segments parallèles (24,25) reliant les extrémités hautes et basses des courbes concaves gauche (22) et droite (23).

## Patentansprüche

1. Handgerät (1) zum Querschneiden eines Rohres unter Verwendung von mindestens einem Schneidrad (7), das in der Querschneideebene (P) auf der äußeren Oberfläche eines Rohres (2) abrollt und einem radialen Druck unterworfen wird, der im Zusammenwirken mit Gegendruckrollen (11,12) im Wesentlichen konstant gehalten wird, um bei jedem Umlauf für eine immer tiefer werdende Einritzung bis zum völligen Durchschneiden des Rohres (2) zu sorgen, wobei das Gerät zwei Halbschalen (3,4) aufweist, die mit Konkavität in Gegenüberstellung mittels in der Schneideebene (P) verstellbarer Spanneinrichtungen (5,6) um das Rohr (2) herum angebracht werden und auf ihren einander gegenüberliegenden konkaven Seiten (31,41) einerseits (4) mindestens ein Schneidrad (7), das ortsfest sein oder sich parallel zu sich selbst entlang einer Radiallinie des Geräts verschieben kann, damit sein schneidender Teil (9) um einen Wert radial aus der konkaven Seite (41) der Halbschale (4) heraus ragt, der gleich oder größer als die Stärke e des Rohres (2) ist, und andererseits (3) mindestens zwei Rollen (11,12) tragen, die so angebracht sind, dass ihre Lauffläche radial aus der konkaven Seite (31) der anderen Halbschale (3) heraus ragt, wobei sie paarweise beiderseits von jedem Schneidrad (7) auf der anderen Halbschale (4) angeordnet sind, um die Ritzkraft bei der Drehung der Einheit zu kompensieren, die man mittels eines unabhängigen Tangentialantriebswerkzeugs (15) erzielt, welches auf Mitnehmereinrichtungen (16) einwirkt, die auf dem Umfang von jeder Halbschale (3,4) verteilt sind, **dadurch gekennzeichnet, dass** jede Halbschale (3,4) von allgemein gleicher Form ist, die man ausgehend von einem Flachprofil mit geeigneter Dicke, zum Beispiel aus Stahlblech, erhält, welches in allgemeiner Form eines Rings (20) ausgestanzt wird, der in seiner Ebene eine vertikale Symmetrieachse (xx') aufweist, wobei in der Mitte des Rings eine Aussparung (21) zur Aufnahme der größten zu schneidenden Rohrquerschnitte (2) vorgesehen ist und sein Umfangsrand in Abhängigkeit vom Profil der Mitnehmereinrichtungen des Antriebswerkzeugs (15) so zugeschnitten ist, dass sich die rechte Seite und die linke Seite in Bezug zur vertikalen Symmetrieachse (xx') des Rings (20) durch Orthogonalprojektion entsprechen können, nachdem der Ring durch zweimaliges Umbiegen im rechten Winkel um zwei zu der vertikalen Symmetrieachse parallele und in gleichem Abstand von dieser angeordnete vertikalen Achsen (L1,L2) in allgemeine Form eines U gebracht worden ist, wodurch nach dem Umbiegen, und dem Anbringen von entsprechenden Bohrungen (8'8",13'13", 14'14") ein Haltebügel für das oder die Räder (7) und/oder die Rollen (11,12) geschaffen wird, wobei die zwischen den beiden Biegeachsen (L1,L2) liegenden, dem Boden des U entsprechenden und die Verbindungsteile (26,27) zwischen der linken und der rechten Seite des Haltebügels bildenden ebenen oberen und unteren Teile des Rings (20) geeignet sind, die verstellbaren Spanneinrichtungen (5,6) der beiden Halbschalen (3,4) nach der Anbringung in Gegenüberstellung um das Rohr (2) herum aufzunehmen.

2. Gerät (1) nach dem vorangehenden Anspruch, **dadurch gekennzeichnet, dass** die verstellbaren Spanneinrichtungen (5,6), die auf den Verbindungsteilen (26,27) von jeder Halbschale (3,4) angeordnet sind, durch beliebige Kombination von einem einstellbaren Kniehebel oder einer tangentialen Schraube (5,6), gegebenenfalls mit drehfest gehaltener Mutter, oder dergleichen zwischen jedem Paar von Verbindungsteilen (26,27) gebildet werden.

3. Gerät (1) nach Anspruch 2, **dadurch gekennzeichnet, dass** die Halbschalen (3,4) auf dem zu schneidenden Rohr (2) in Gegenüberstellung nach und nach gegeneinander verspannt werden, und zwar an jedem ihrer Enden mittels einer tangentialen Schraube (5,6), welche oben mit dem Kopf nach rechts und unten mit dem Kopf nach links oder umgekehrt angebracht wird, wobei die durch die einander gegenüberliegenden Verbindungsteile (26,27) hindurchtretenden Schrauben (5,6) mit einer Mutter zusammenwirken, die gegebenenfalls drehfest gehalten wird, zum Beispiel durch passendes Tiefziehen des Verbindungsteils (26,27) an der Berührungsstelle mit der Mutter.

4. Gerät (1) nach einem der vorangehenden Ansprüche, **dadurch gekennzeichnet, dass** die Mitnehmereinrichtungen (16) auf der konvexen Seite oder dem Umfang von jeder Halbschale (3,4) von der Art eines halben Schaltrades oder dergleichen sind, wobei sie zum Zusammenwirken mit einem Hakenschlüssel (15) vorgesehen sind, der durch eine kleine Bewegung des Werkzeugs (15) für eine große Drehung sorgt.

5. Gerät (1) nach dem vorangehenden Anspruch, **dadurch gekennzeichnet, dass** die auf jeder Seite des Flachprofilrings (20) vorgesehenen Vorsprünge (16) alle gleich und in Bezug zur vertikalen Symmetrieachse (xx') symmetrisch angeordnet sind, und zwar in ausreichender Anzahl für einen guten Fortschritt der Drehung ohne übermäßige Bewegung des Antriebswerkzeugs.

6. Gerät (1) nach dem vorangehenden Anspruch, **dadurch gekennzeichnet, dass** die Halbschalen (3,4) so um das zu schneidende Rohr (2) herum zusammengesetzt werden, dass der Verbindungsteil (26) der einen (3) dem Verbindungsteil (27) der anderen (4) gegenüberliegt, was für eine Kontinuität bei der Aufeinanderfolge der Vorsprünge (16) sorgt, die auf diese Weise ein Schaltrad bilden.

7. Gerät (1) nach einem der vorangehenden Ansprüche, **dadurch gekennzeichnet, dass** die Bohrungen von jeder der Halbschalen (3,4) zur Aufnahme der Achsen (8) der Räder (7) und/oder der Rollen (11,12) und der Verbindungsschrauben (5,6) direkt auf dem Flachprofilring (20), vor dem Biegen zum U, hergestellt werden, und dass vorteilhafterweise aber nicht notwendigerweise sämtliche dieser Bohrungen symmetrisch auf beiden Seiten des Rings (20) hergestellt werden.

8. Gerät (1) nach einem der Ansprüche 4 bis 7, **dadurch gekennzeichnet, dass** das Antriebswerkzeug (15) einen Handgriff (152) umfasst, der durch einen halbmondförmigen Teil (153) mit konkaver Innenseite (154) verlängert ist, die mit dem Handgriff (152) durch eine konvexe Schulter (155) verbunden ist und mit einem Haken (151) von passender Form endet, um sich in einen Vorsprung (16) des Schaltrades einzufügen, so dass man beim Aufbringen einer Hebelkraft auf den Handgriff (152) um den Drehpunkt auf der Schulter (155), die sich auf einem anderen Vorsprung (16) abstützt, die Einheit zwingt, sich um das Rohr (2) herum zu drehen, wobei man den Haken (151) nacheinander mit den folgenden Vorsprüngen in Eingriff bringt, um für eine regelmäßige Drehbewegung zu sorgen.

9. Gerät (1) nach einem der vorangehenden Ansprüche, **dadurch gekennzeichnet, dass** die mittige Aussparung (21) des Flachprofilrings (20) zum einen links und rechts von der vertikalen Symmetrieachse (xx') durch konkave Kurven (22,23), vorteilhafterweise identische Kreisbögen, in Gegenüberstellung angebracht, begrenzt wird, deren Radius mindestens gleich dem Radius des größten zu schneidenden Rohres (2) ist und höchstens derart, dass das kleinste zu schneidende Rohr (2) ohne Kontakt mit der konkaven inneren Oberfläche (31,41) der Halbschalen (3,4) noch auf zwei Rollen (11,12) oder zwei Schneidrädern (7) aufliegen kann, und zum anderen oben und unten durch parallele Abschnitte (24,25), welche die oberen und unteren Enden der linken (22) und rechten (23) konkaven Kurve verbinden.

## Claims

1. Manually operated device (1) for the transverse cutting of a pipe, which uses at least one cutting wheel (7) that rolls on the outer surface of a pipe (2) in the transverse cutting plane (P) and is subjected to a radial pressure that is kept essentially constant, in combination with backing rollers (11, 12) so as to produce at each rotation a progressively deepening groove until the pipe (2) has been cut through completely, the device comprising two half-shells (3, 4) mounted with their concave sides opposite one another around the pipe (2) by tightening means (5, 6) that can be adjusted in the cutting plane (P), and which support, on their opposed concave faces (31, 41), in the one case (4) at least one cutting wheel (7) that may be fixed or may move parallel to itself along a radius of the device so that its cutting edge (9) projects radially beyond the concave face (41) of the half-shell (4) by an amount equal to or more than the thickness of the pipe (2), and in the other case (3) at least two rollers (11, 12) mounted so that their rolling surface projects radially from the concave face (31) of the other half-shell (3), these being arranged in pairs on either side of each cutting wheel (7) on the other half-shell (4) to compensate the cutting force during rotation of the assembly, obtained by an independent tangential drive tool (15) which acts on engagement means (16) distributed at the periphery of each half-shell (3, 4),
**characterised in that**
each half-shell (3, 4) has the same general shape obtained from a plate of suitable thickness, for example made from steel sheet, which is cut out by stamping in the general shape of a ring (20) having in its plane a vertical axis of symmetry (xx'), a hollow (21) at the centre of the ring being provided to receive the largest sections of the pipe (2) to be cut and the periphery of which is cut as a function of the profile of the means for engaging the drive tool (15), such that the right- and left-hand sides relative to the vertical axis of symmetry (xx') of the ring (20) can correspond by orthogonal projection after the ring has been bent into the general shape of a U by a double rectangular fold around two vertical axes (L1, L2) parallel to the said vertical axis of symmetry and arranged an equal distance therefrom, so as to produce after folding and appropriate drilling (8' 8", 13' 13", 14' 14") a bracket for the cutting wheel(s) (7) and/or the rollers (11, 12), the upper and lower flat parts of the ring (20) located between the two fold axes (L1, L2) corresponding to the base of the U and forming connection pieces (26, 27) between the left- and right-hand sides of the bracket which are able to receive adjustable tightening means (5, 6) for the two half-shells (3, 4) after fitting opposite one another around the pipe (2).

2. Device (1) according to the preceding claim,
**characterised in that**
the adjustable tightening means (5, 6) arranged on the connection pieces (26, 27) of each half-shell (3, 4) consist of any combination of an adjustable knee-piece or a tangential screw (5, 6), possibly with a semi-captive nut or similar between each pair of connection pieces (26, 27).

3. Device (1) according to Claim 2,
**characterised in that**
the half-shells (3, 4) are progressively tightened towards one another on the pipe (2) to be cut by means of a tangential screw (5, 6) at each of their ends, mounted with head to the right at the top and head to the left at the bottom or conversely, the screws (5, 6) passing through the opposed connection pieces (26, 27) and cooperating with a nut which is possibly semi-captive for example by virtue of appropriate flanging of the connection piece (26, 27) around and in contact with the said nut.

4. Device (1) according to any of the preceding claims,
**characterised in that**
the engagement means (16) on the convex face or periphery of each half-shell (3, 4) are of the type of a ratchet half-wheel or similar, provided in order to co-operate with a cogged key (15) that produces a large rotation as the result of a small downward effort upon the tool (15).

5. Device (1) according to the preceding claim,
**characterised in that**
the cogs (16) provided on either side of the flat ring (20) are all identical and are arranged symmetrically relative to the vertical axis of symmetry (xx') in sufficient number to ensure a good progression of the rotation without exerting excessive downward effort upon the drive tool.

6. Device (1) according to the preceding claim,
**characterised in that**
the half-shells (3, 4) are assembled around the pipe (2) to be cut, in such manner that the connection piece (26) of one of them (3) is opposite the connection piece (27) of the other (4), so ensuring continuity in the succession of cogs (16) such that a ratchet wheel is formed.

7. Device (1) according to any of the preceding claims,
**characterised in that**
the holes drilled in each half-shell (3, 4) to receive the axles (8) of the cutting wheels (7) and/or the rollers (11, 12) and connecting screws (5, 6), are made directly in the flat ring (20) before the latter is shaped into a U, and advantageously but not necessarily, all the said holes are made symmetrically on one side and the other of the ring (20).

8. Device (1) according to any of Claims 4 to 7,
**characterised in that**
the drive tool (15) comprises a sleeve (152) extending into a half-moon section (153) with a concave inside face (154) connected to the sleeve (152) via a convex shoulder (155) and ending in a hook (151) of shape appropriate for engaging with a cog (16) of the ratchet, in such manner that by using the sleeve (15) as a lever pivoting around the shoulder (155) that rests against another cog (16), the assembly is made to turn around the pipe (2) as the hook (151) is engaged successively in the following cogs to produce a regular rotation movement.

9. Device (1) according to any of the preceding claims,
**characterised in that**
the central hollow (21) of the flat ring (20) is delimited on the one hand to the left and right of the vertical axis of symmetry (xx') by concave curves (22, 23), which are advantageously identical arcs of a circle and are fitted opposite one another, the radius of which is at least equal to the radius of the largest pipe (2) to be cut and at most such that the smallest pipe (2) to be cut can still rest against two rollers (11, 12) or two cutting wheels (7) without making contact with the concave inside surface (31, 41) of the half-shells (3, 4), and on the other hand at the top and bottom by parallel segments (24, 25) that connect the top and bottom ends of the left-hand concave curve (22) and the right-hand concave curve (23).
